# EUROPEAN PATENT SPECIFICATION

(11) **EP 4 657 007 B1**
(45) Date of publication and mention of the grant of the patent: **09.12.2026**
(21) Application number: 24819556.2
(22) Date of filing: 04.06.2024
(51) Int. Cl.: G01B 7/06, G01B 7/00, G01B 21/08, G01L 1/00, H01M 10/04, H01M 10/42, H01M 10/48

(54) **BATTERY CELL THICKNESS MEASURING DEVICE AND LAMINATION DEVICE FOR SECONDARY BATTERIES, INCLUDING SAME**
VORRICHTUNG ZUR MESSUNG DER BATTERIEZELLENDICKE UND LAMINIERUNGSVORRICHTUNG FÜR SEKUNDÄRBATTERIEN DAMIT
DISPOSITIF DE MESURE D'ÉPAISSEUR D'ÉLÉMENT DE BATTERIE ET DISPOSITIF DE STRATIFICATION POUR BATTERIES SECONDAIRES COMPRENANT CELUI-CI

(30) Priority: 07.06.2023 KR 20230073186
(43) Date of publication of application: 03.12.2025
(73) Proprietor: LG ENERGY SOLUTION, LTD., Seoul 07335 (KR)
(72) Inventor: JUNG, Woo Jung, Daejeon 34122 (KR)
(74) Representative: Goddar, Heinz J.
(86) International application number: PCT/KR2024/007623
(87) International publication number: WO 2024/253405

(56) References cited:
- EP-A2- 2 211 138
- CN-U- 212 402 835
- JP-A- 2000 337 859
- KR-A- 20180 049 512
- KR-A- 20180 049 512
- KR-B1- 101 145 840
- KR-B1- 101 145 840
- KR-B1- 102 476 002
- US-A- 5 413 806
- US-A1- 2011 020 532

## Description

### Technical Field

The present invention relates to a battery cell thickness measuring device and a lamination device for a secondary battery comprising the same.

This application claims the benefit of priority based on Korean Patent Application No. 10-2023-0073186 dated June 7, 2023.

### Background Art

There are high demands for rectangular secondary batteries, pouch-type secondary batteries, and the like as secondary batteries used in mobile devices and electric vehicles.

Particularly, pouch-type batteries with a structure in which a stacked or stacked/folded electrode assembly is embedded in a pouch-type battery case have recently attracted a lot of attention due to their low manufacturing cost, small weight, easy shape deformation, and the like.

Accordingly, in a secondary battery production process, a dimensional management of battery cells becomes important to achieve consistent quality of the produced battery cells.

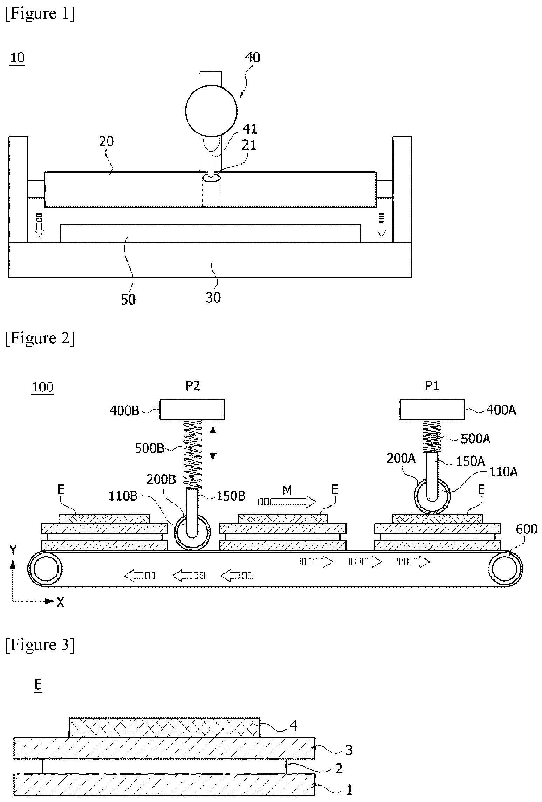

Figure 1 is a schematic diagram showing a conventional battery cell thickness measuring device (10).

Referring to Figure 1, the conventional battery cell thickness measuring device (10) has a structure pressurizing a battery cell (50), which is mounted in a stationary state on an upper surface of a base plate (30), using a pressurizing plate (20).

At this time, in a state where the battery cell (50) is pressurized, a touch portion (41) of a drop gauge (40) is passed through a through hole (21) drilled in the pressurizing plate (20), thereby measuring the pressurized depth. measurement, and measuring the thickness of the battery cell (50) based on this measurement.

However, the battery cell thickness measuring device (10) has the risk of damaging the battery cell (50) in the process of pressurizing the battery cell (50), and the drop gauge (40) can only measure the thickness of the battery cell (50) portion where the through hole (21) is formed, thereby having a problem that it is difficult to measure the thickness of other portions.

Also, the touch portion (41) of the drop gauge (40) in contact with the battery cell (50) has weak durability, thereby increasing maintenance and repair costs, and accordingly, repeated measurements are not only limited for a precise thickness measurement, but also when there are foreign substances on the touch portion (41), there is a problem that the precise thickness measurement is difficult.

In addition, since the conventional battery cell thickness measuring device (10) measures the battery cell (50) in a stationary state, in an in-line production process in which the battery cell (50) continuously moves, there is a problem that it is difficult to measure the thickness of the battery cell (50) in real time.

Another online battery cell thickness measuring device is described in KR20180049512A, whereby the battery cell is manufactured and transported on a conveyor, the apparatus comprising a pressurising roller. The thickness is measured in terms of a relative distance difference between a reference and the battery cell, the sensor being mounted on a support above the conveyor and the battery transported by said conveyor.

### Disclosure

### Technical Problem

It is a problem to be solved by the present invention to provide a battery cell thickness measuring device capable of measuring thicknesses of battery cells in real time in a process that a plurality of battery cells continuously moves, and a lamination device for a secondary battery comprising the same.

### Technical Solution

In order to solve the above problem, a battery cell thickness measuring device related to one example of the present invention comprises a first pressurizing roller installed at a first fixed position on a transfer part, contacting a battery cell when the battery cell during transfer passes the first fixed position, and pressurizing the battery cell in the thickness direction of the battery cell, a first pressure-sensing film wound around the first pressurizing roller and provided to measure the pressure received from the battery cell while the first pressurizing roller pressurizes the battery cell, and a control part calculating the thickness of the battery cell based on the pressure measured by the first pressure-sensing film.

Also, the first pressure-sensing film may be provided so that the pressure received from the battery cell increases as the thickness of the battery cell increases.

In addition, the battery cell thickness measuring device may comprise a first fixing block positioned at a predetermined distance away from the transfer part at the first fixed position, and a first elastic connection member elastically connecting the first fixing block and the first pressurizing roller.

Furthermore, the first pressurizing roller may be provided to enable idle-rotation.

Also, the control part may be provided to compare the calculated thickness of the battery cell with the predetermined standard thickness of the battery cell. In addition, the control part may be provided to calculate the difference between the calculated thickness of the battery cell and the predetermined standard thickness of the battery cell.

Furthermore, if the difference between the predetermined standard thickness of the battery cell and the calculated thickness of the battery cell is outside an acceptable error range, the control part may determine a quality of the battery cell to be defective.

Also, the battery cell thickness measuring device may comprise a display part displaying the quality state of the battery cell.

In addition, the control part may be provided to control the operation of the transfer part based on the quality state of the battery cell.

Furthermore, the battery cell thickness measuring device may comprise a second pressurizing roller installed at a second fixed position spaced apart from the first fixed position along the transfer direction of the battery cell, contacting the battery cell when the battery cell during transfer passes the second fixed position, and pressurizing the battery cell in the thickness direction of the battery cell, and a second pressure-sensing film wound around the second pressurizing roller and measuring the pressure received from the battery cell while the second pressurizing roller pressurizes the battery cell.

Also, the battery cell thickness measuring device may comprise a second fixing block positioned at a predetermined distance away from the transfer part at the second fixed position, and a second elastic connection member elastically connecting the second fixing block and the second pressurizing roller.

In addition, the second pressurizing roller may be provided to enable idle-rotation.

Furthermore, the control part may be provided to calculate the thickness of the battery cell based on the pressures measured by the first and second pressure-sensing films.

Also, the transfer part may comprise a conveyor.

In addition, a lamination device for a secondary battery related to one example of the present invention may comprise a laminate part including a rolling roller rolling battery cells on which electrodes and separators are laminated, a transfer part provided to transfer battery cells on which laminating is completed, and a battery cell thickness measuring device installed on the transfer path of the transfer part. In addition, the battery cell thickness measuring device comprises a first pressurizing roller installed at a first fixed position on a transfer part, contacting a battery cell when the battery cell during transfer passes the first fixed position, and pressurizing the battery cell in the thickness direction of the battery cell, a first pressure-sensing film wound around the first pressurizing roller and provided to measure the pressure received from the battery cell while the first pressurizing roller pressurizes the battery cell, and a control part calculating the thickness of the battery cell based on the pressure measured by the first pressure-sensing film.

Furthermore, if the difference between the predetermined standard thickness of the battery cell and the calculated thickness of the battery cell is outside an acceptable error range, the control part may be provided to determine a quality of the battery cell to be defective.

Also, the control part may be provided to control the operation of the laminate part based on the quality state of the battery cell.

In addition, the control part may be provided to control the operation of the transfer part based on the quality state of the battery cell.

Furthermore, according to another aspect of the present invention, as a device that on a conveyor sequentially transferring battery cells with a predetermined thickness in which electrodes and separators are alternately laminated, the thicknesses of the battery cells are continuously measured, a battery cell thickness measuring device may be provided, which comprises a pressurizing roller installed at a fixed position on the conveyor, contacting the battery cell when the battery cell during transfer passes the fixed position, and pressurizing the surface of the battery cell while changing its height in the thickness direction of the battery cell; a pressure-sensing film wound around the pressurizing roller and measuring the pressure received from the surface of the battery cell while the pressurizing roller pressurizes the battery cell, and a control part calculating the thickness of the battery cell based on the pressure measured by the pressure-sensing film.

In addition, according to another aspect of the present invention, as a device that on a conveyor sequentially transferring battery cells with a predetermined thickness in which electrodes and separators are alternately laminated, the thicknesses of the battery cells are continuously measured, a battery cell thickness measuring device may be provided, which comprises a first pressurizing roller installed at a first fixed position on the conveyor, contacting the battery cell when the battery cell during transfer passes the fixed position, and pressurizing the surface of the battery cell while changing its height in the thickness direction of the battery cell, a first pressure-sensing film wound around the first pressurizing roller and measuring the pressure received from the surface of the battery cell while the first pressurizing roller pressurizes the battery cell, a second pressurizing roller installed at a second fixed position spaced apart from the first fixed position along the transport direction of the battery cell, contacting the battery cell when the battery cell during transfer passes the fixed position, and pressurizing the surface of the battery cell while changing its height in the thickness direction of the battery cell, a second pressure-sensing film wound around the second pressurizing roller and measuring the pressure received from the surface of the battery cell while the second pressurizing roller pressurizes the battery cell, and a control part provided to calculate the thickness of the battery cell based on the pressures measured by the first and second pressure-sensing films.

### Advantageous Effects

As discussed above, the battery cell thickness measuring device related to at least one example of the present invention and the lamination device for a secondary battery comprising the same have the following effects.

It is possible to calculate the thickness of the battery cell based on the pressure that the pressure-sensing film wound around the pressurizing roller receives from the battery cell.

Also, in a process in which a plurality of battery cells continuously moves, it is possible to measure the thicknesses of the battery cells in real time.

In addition, it is possible to continuously measure the thicknesses of a plurality of battery cells in real time on a conveyor that the plurality of battery cells continuously moves.

### Description of Drawings

Figure 1 is a schematic diagram showing a conventional battery cell thickness measuring device.
Figure 2 is a diagram showing a battery cell thickness measuring device according to one example of the present invention.
Figure 3 is a schematic diagram showing the battery cell shown in Figure 2.
Figure 4 is a configuration diagram showing a battery cell thickness measuring device and a lamination device for a secondary battery according to one example of the present invention.

### Mode for Invention

Hereinafter, with reference to the accompanying drawings, a battery cell thickness measuring device related to one example of the present invention, and a lamination device for a secondary battery comprising the same will be described.

In addition, regardless of the reference numerals, the same or corresponding components are given by the same or similar reference numerals, duplicate descriptions thereof will be omitted, and for convenience of explanation, the size and shape of each component member as shown can be exaggerated or reduced.

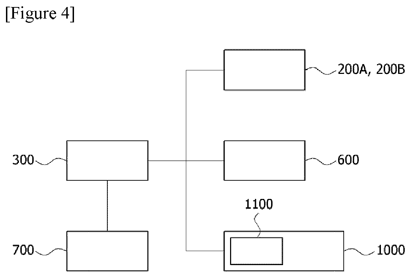

Figure 2 is a diagram showing a battery cell thickness measuring device (100) according to one example of the present invention, Figure 3 is a schematic diagram showing the battery cell (E) shown in Figure 2, and Figure 4 is a configuration diagram showing a battery cell thickness measuring device and a lamination device for a secondary battery according to one example of the present invention.

The battery cell thickness measuring device (100) according to one example of the present invention is a device continuously calculating thicknesses of battery cells (E) on a transfer part (600) sequentially transferring battery cells (E) with a predetermined thickness in which electrodes and separators are alternately laminated.

The battery cell thickness measuring device (100) may comprise a transfer part (600) sequentially transferring battery cells (E) with a predetermined thickness in which electrodes and separators are alternately laminated. The transfer part (600) may comprise a conveyor, or a plurality of transfer rolls. Hereinafter, for convenience of explanation, the transfer part (600) will be described as an example which is a conveyor.

The battery cell thickness measuring device (100) may be a device applied to an electrode assembly process of a secondary battery manufacturing process, for example, may be a device used in a lamination process.

Referring to Figures 2 and 3, the battery cell (E) may comprise electrodes and separators, and the battery cell (E) may comprise unit cells in which electrodes and separators are alternately laminated. As one example, the unit cell may comprise a first separator (1), a negative electrode (2) laminated on the first separator (1), a second separator (3) laminated on the negative electrode (2), and a positive electrode (4) laminated on the second separator (3).

A lamination device for a secondary battery related to one example of the present invention may comprise a laminate part (1000) including a rolling roller (1100) rolling battery cells (E) in which electrodes and separators are laminated, and a transfer part (600) provided to transfer the battery cells on which laminating is completed, and a battery cell thickness measuring device (100) installed on the transfer path of the transfer part (600).

The battery cell thickness measuring device (100) may be installed on the transfer path (M) where the battery cells (E), on which the laminating process is completed, are transferred to the next process, and may measure the thickness of a plurality of battery cells (E) during transfer continuously and in real time.

Also, the battery cell thickness measuring device (100) may contribute to managing a laminating quality by measuring the thickness of the battery cell (E).

For example, when the difference between the thickness of the battery cell (E) calculated from the battery cell thickness measuring device (100) and the predetermined standard thickness of the battery cell (E) is outside the acceptable error range, it may be determined that the laminate quality of the battery cell (E) is defective. In this document, standard thickness means a thickness of a good battery cell after the lamination process.

Referring to Figures 2 to 4, the battery cell thickness measuring device (100) according to the present invention comprises a first pressurizing roller (110A), a first pressure-sensing film (200A), and a control part (300).

In this document, the X-axis direction represents the transport direction (M) of the battery cells (E), and the Y-axis direction represents the laminating direction or thickness direction of the battery cells (E). In addition, the Y-axis direction may be the up and down direction of the first pressurizing roller (110A).

The first pressurizing roller (110A) is installed at a first fixed position (P1) on the conveyor (600), and provided to pressurize the surface of the battery cell (E) in the thickness direction (Y-axis direction) of the battery cell (E) when the battery cell (E) during transfer passes the first fixed position (P1). The first pressurizing roller (110A) may be provided so that its height changes in the thickness direction (Y-axis direction) of the battery cell (E) when it contacts the battery cell (E). That is, in the process of passing the battery cell (E), the first pressurizing roller (110A) may be provided to rise by the thickness of the battery cell (E). Of course, a force acts on the first pressurizing roller (110A) in a direction of pressurizing the surface of the battery cell (E) along the thickness direction of the battery cell (E).

Also, the first pressurizing roller (110A) may be installed to be movable up and down in place (first fixed position) along the thickness direction of the battery cell (E). When the battery cell (E) passes the first fixed position (P1), it may be positioned between the conveyor (600) and the first pressurizing roller (110A).

In addition, the first pressurizing roller (110A) may form a space which is spaced apart from the upper surface of the conveyor (600) and through which the battery cells (E) pass. The size of the space may vary depending on the thickness of the battery cell (E).

The first pressure-sensing film (200A) is wound around the first pressurizing roller (110A), and provided to measure the pressure received from the surface of the battery cell (E) while the first pressurizing roller (110A) pressurizes the battery cell (E).

The pressure received by the first pressure-sensing film (200A) may vary depending on the thickness of the battery cell (E), and accordingly, the pressure measured on the first pressure-sensing film (200A) may vary depending on the thickness of the battery cell (E).

Also, the first pressure-sensing film (200A) may be provided to measure the pressure continuously and in real time. For example, the control part (300) may measure the pressure in a time unit of 50ms or less, 30ms or less, 20ms or less, 10ms or less, 5ms or less, or 1ms or less.

In addition, the control part (300) calculates the thickness of the battery cell (E) based on the pressure measured by the first pressure-sensing film (200A). The control part (300) may continuously calculate the thickness of the battery cell (E) from the pressure measured by the first pressure-sensing film (200A).

As one example, when the battery cell (E) comprises a first separator (1), a negative electrode (2) laminated on the first separator (1), a second separator (3) laminated on the negative electrode (2), and a positive electrode (4) laminated on the second separator (3), in the process that the battery cell (E) during transfer passes the first pressurizing roller (110A), the first pressurizing roller (110A) moves up along the thickness direction (Y-axis direction) of the battery cell.

When the first pressurizing roller (110A) contacts the positive electrode surface forming the uppermost surface of the battery cell (E), in the process that it passes the surface of the positive electrode (4) of the battery cell (E), the pressure measured from the first pressure-sensing film (200A) may have a constant value, or may be measured in a value within a predetermined range, and the control part (300) may calculate the thickness of the battery cell (E) based on the pressure pressurizing the positive electrode surface.

The control part (300) may calculate the thickness of each of the plurality of battery cells (E) for each pressure measurement time. A user can know the locations of the battery cells (E) corresponding to the thickness values provided from the control part (300), based on the already known length of the battery cell (E) along the transfer direction (M).

Also, the control part (300) may calculate the thickness of the battery cell (E) from the pressure received by the first pressure-sensing film (200A) using a computer program.

For example, by storing the relationship between the pre-stored pressure of the first pressure-sensing film (200A) and the thickness of the battery cell (E) as data in advance, the control part (300) may measure the thickness of the battery cell (E) based on this.

In addition, the battery cell thickness measuring device (100) according to one example of the present invention may comprise a storage part storing thickness data information of the battery cell (E) according to the pressure of the first pressure-sensing film (200A).

The control part (300) may calculate the thickness of the battery cell (E) corresponding to the pressure measured from the first pressure-sensing film (200A) utilizing the stored data information. For example, the data information may comprise information that the thickness of the battery cell (E) is a value of B when the pressure measured from the first pressure-sensing film (200A) (value measured in the process of passing through the positive electrode surface of the battery cell) is a value of A, and may comprise information that the thickness of the battery cell (E) is a value of D when the pressure measured from the first pressure-sensing film (200A) (value measured in the process of passing through the positive electrode surface of the battery cell) is a value of C. When the pressure measured from the first pressure-sensing film (200A) is the value of A, the control part (300) may calculate the value of B, which is the thickness of the battery cell (E), corresponding to the value of A stored in the data information, thereby providing it to the user.

In one example, as the thickness of the battery cell (E) increases, the pressure that the first pressure-sensing film (200A) receives from the surface of the battery cell (E) may increase. As the thickness of the battery cell (E) increases, the first pressure-sensing film (200A) has an increased force to be pressurized from the surface of the contacted battery cell (E), whereby the received pressure may increase.

The battery cell thickness measuring device (100) may comprise a first fixing block (400A) located at a predetermined distance from the upper surface of the conveyor (600) at the first fixed position (P1), and a first elastic connection member (500A) elastically connecting the first fixing block (400A) and the first pressurizing roller (110A). The first elastic connection member (500A) may comprise a spring.

As the first elastic connection member (500A) is elastically connected to the first fixing block (400A), the first pressurizing roller (110A) may move up and down in place (first fixed position) depending on the thickness change of the battery cell (E). As one example, in the process that the first pressurizing roller (110A) passes the battery cell, the first pressurizing roller (110A) rises, and the first elastic connection member (500A) is compressed, and when the first pressurizing roller (110A) passes the battery cell and then leaves the battery cell, the first pressurizing roller (110A) descends, and the first elastic connection member (500A) is released from its compressed state.

The battery cell thickness measuring device (100) may comprise a first mounting frame (150A) on which the first pressurizing roller (110A) is rotatably mounted at the first fixed position (P1).

In this instance, as the first mounting frame (150A) is elastically connected to the first fixing block (400A) by the first elastic connecting member (500A), the first mounting frame (150A) may move up and down in place (first fixed position) depending on the thickness change of the battery cell (E).

In one example, the first pressurizing roller (110A) may be provided to enable idle-rotation. That is, the first pressurizing roller (110A) may be mounted on the first mounting frame (150A) to enable idle-rotation. When the battery cell (E) passes the first fixed position (P1), the first pressurizing roller (110A) enables idle-rotation along the surface of the battery cell (E) while maintaining a state in contact with the surface of the battery cell (E).

According to the invention, the first pressure-sensing film (200A) is a product which is wound around the first pressurizing roller (110A) in the form of a film and measures pressure applied from the outside. The type is not particularly limited, and for example, Kaitronics' products may be used.

The control part (300) may be provided to determine the quality of the battery cell (E) based on the calculated thickness of the battery cell (E). By determining the quality (laminating quality) of the battery cells (E), it is possible to enable the consistent quality management of the battery cells (E).

For example, if the difference between the predetermined standard thickness of the battery cell (E) and the calculated thickness of the battery cell (E) is outside the acceptable error range, the control part (300) may determine the quality of the battery cell (E) to be defective. For example, when the battery cell measuring device (100) according to the present invention is applied to a laminate process, the defect may mean a poor laminate quality.

Also, if the difference between the predetermined standard thickness of the battery cell (E) and the calculated thickness of the battery cell (E) is within the acceptable error range, the control part (300) may determine the quality of the battery cell (E) to normal or good.

In addition, the battery cell thickness measuring device (100) may comprise a display part (700) displaying the quality state of the battery cell (E). The display part (700) may display the quality state of the battery cell (E) as good or bad on the screen.

Furthermore, the battery cell thickness measuring device (100) may comprise a notification part sounding an alarm when the quality of the battery cell (E) is poor.

Also, the control part (300) may control the operation of the conveyor (600) based on the quality state of the battery cells (E). In one example, the control part (300) may stop the operation of the conveyor (600) when the quality of the battery cell (E) is poor, and as such, by preventing the battery cell (E) of poor quality and the battery cell (E) of good quality from being mixed, it is possible to achieve an excellent quality management of the battery cells (E).

In addition, the battery cell thickness measuring device (100) may be provided to measure the thicknesses of the battery cells (E) at a plurality of positions, respectively, along the transfer direction (M) of the battery cells (E).

The battery cell thickness measuring device (100) may comprise a second pressurizing roller (110B) and a second pressure-sensing film (200B).

The second pressurizing roller (110B) is installed at a second fixed position (P2) on the conveyor (600), and provided to pressurize the battery cell (E) in the thickness direction (Y-axis direction) of the battery cell (E) when the battery cell (E) during transfer passes the second fixed position (P2).

The second pressurizing roller (110B) may be provided so that its height changes in the thickness direction (Y-axis direction) of the battery cell (E) when it contacts the battery cell (E). That is, in the process of passing the battery cell (E), the second pressurizing roller (110B) may be provided to rise by the thickness of the battery cell (E). Of course, a force acts on the second pressurizing roller (110B) in a direction of pressurizing the surface of the battery cell (E) along the thickness direction of the battery cell (E).

Also, the second pressurizing roller (110B) is installed at a second fixed position (P2) spaced apart from the first fixed position (P1) along the transfer direction of the battery cell (E), and provided to contact the battery cell (E) when the battery cell (E) during transfer passes the second fixed position (P2).

In addition, the second pressurizing roller (100B) may be installed to be movable up and down in place (second fixed position) along the thickness direction of the battery cell (E). When the battery cell (E) passes the second fixed position (P2), it may be positioned between the conveyor (600) and the second pressurizing roller (110B).

Furthermore, the second pressurizing roller (110B) may form a space which is spaced apart from the upper surface of the conveyor (600) and through which the battery cells (E) passes. The size of the space may vary depending on the thickness of the battery cell (E).

The second pressure-sensing film (200B) is wound around the second pressurizing roller (110B), and provided to measure the pressure received from the surface of the battery cell (E) while the second pressurizing roller (110B) pressurizes the battery cell (E).

The pressure received by the second pressure-sensing film (200B) may vary depending on the thickness of the battery cell (E), and accordingly, the pressure measured from the second pressure-sensing film (200B) may vary depending on the thickness of the battery cell (E).

Also, the second pressure-sensing film (200B) may be provided to measure pressure continuously and in real time. For example, the control part (300) may measure pressure in a time unit of 50ms or less, 30ms or less, 20ms or less, 10ms or less, 5ms or less, or 1ms or less.

In addition, the control part (300) calculates the thickness of the battery cell (E) based on the pressure measured by the second pressure-sensing film (200B). The control part (300) may continuously calculate the thickness of the battery cell (E) from the pressure measured by the second pressure-sensing film (200B).

Furthermore, the control part (300) calculates the thickness of the battery cell (E) based on the pressure measured by the first pressure-sensing film (200A). The control part (300) may continuously calculate the thickness of the battery cell (E) from the pressure measured by the first pressure-sensing film (200A).

As one example, when the battery cell (E) comprises a first separator (1), a negative electrode (2) laminated on the first separator (1), a second separator (3) laminated on the negative electrode (2), and a positive electrode (4) laminated on the second separator (3), in the process that the battery cell (E) during transfer passes the second pressurizing roller (110B), the second pressurizing roller (110B) moves up along the thickness direction (Y-axis direction) of the battery cell.

When the second pressurizing roller (110B) contacts the positive electrode surface forming the uppermost surface of the battery cell (E), in the process that it passes the surface of the positive electrode (4) of the battery cell (E), the pressure measured from the second pressure-sensing film (200B) may have a constant value, or may be measured in a value within a predetermined range, and the control part (300) may calculate the thickness of the battery cell (E) based on the pressure pressurizing the positive electrode surface.

The battery cell thickness measuring device (100) may comprise a second fixing block (400B) located at a predetermined distance from the upper surface of the conveyor (600) at the second fixed position (P2), and a second elastic connection member (500B) elastically connecting the second fixing block (400B) and the second pressurizing roller (110B). The second elastic connection member (500B) may comprise a spring.

As the second elastic connection member (500B) is elastically connected to the second fixing block (400B), the second pressurizing roller (110B) may move up and down in place depending on the thickness change of the battery cell (E).

As one example, in the process that the second pressurizing roller (110B) passes the battery cell, the second pressurizing roller (110B) rises, and the second elastic connection member (500B) is compressed, and when the second pressurizing roller (110B) passes the battery cell and then leaves the battery cell, the second pressurizing roller (110B) descends, and the second elastic connection member (500B) is released from its compressed state.

The battery cell thickness measuring device (100) may comprise a second mounting frame (150B) on which the second pressurizing roller (110B) is rotatably mounted at the second fixed position (P2).

In this instance, as the second mounting frame (150B) is elastically connected to the second fixing block (400B) by the second elastic connecting member (500B), the second mounting frame (150B) may move up and down in place (second fixed position) depending on the thickness change of the battery cell (E).

In one example, the second pressurizing roller (110B) may be provided to enable idle-rotation. That is, the second pressurizing roller (110B) may be mounted on the second mounting frame (150B) to enable idle-rotation. When the battery cell (E) passes the second fixed position (P2), the second pressurizing roller (110B) enables idle-rotation along the surface of the battery cell (E) while maintaining a state in contact with the surface of the battery cell (E).

In one embodiment, if the second pressure-sensing film (200B) is a product which can be wound around the second pressurizing roller (110B) in the form of a film and measure pressure applied from the outside, the type is not particularly limited, and for example, Kaitronics' products may be used.

In this document, the method of measuring the thickness of the battery cell (E) through the first pressure-sensing film (200A) at the first fixed position (P1) and the method of measuring the thickness of the battery cell (E) by the second pressure-sensing film (200B) at the second fixed position (P2) are the same.

The battery cell thickness measuring device (100) installs the plurality of pressurizing rollers at the plurality of fixed positions, whereby it is possible to increase the reliability of the calculated thickness measurement value of the battery cell (E).

In one example, the control part (300) calculates the average thickness value of the battery cell from the average value of the pressure values measured in the plurality of pressure-sensing films (200A, 200B), whereby it is possible to increase the reliability of the thickness measurement value of the battery cell.

A lamination device for a secondary battery related to one example of the present invention may comprise a laminate part (1000) in which electrodes and separators are alternately laminated to laminate a battery cell (E) having a predetermined thickness.

Also, the lamination device for a secondary battery may comprise a conveyor (600) continuously transferring a plurality of battery cells in which laminating is completed.

In addition, the lamination device for a secondary battery comprises a battery cell thickness measuring device (100) installed on the transfer path of the conveyor (600). The battery cell (E) transferred to the conveyor (600) may be a battery cell (E) in which the laminating process is completed.

As previously described, the battery cell thickness measuring device (100) may comprise one or more pressurizing rollers installed at one or more fixed positions on the conveyor (600) and pressurizing a surface of a battery cell (E) while their heights change depending on the thickness change of the battery cell (E) when the battery cell (E) during transfer passes the fixed positions, pressure-sensing films wound around the pressurizing rollers and provided to measure the pressure received from the surface of the battery cell (E) while the pressurizing roller pressurizes the battery cell (E), and a control part provided to calculate the thickness of the battery cell (E) based on the pressures measured by the pressure-sensing films.

Also, the control part (300) may be provided to control the operation of the laminate part (1000) based on the quality state of the battery cell.

The laminate part (1000) may comprise a pair of rolling rollers (1100), and may have a structure in which it allows the battery cells (E) to pass between the pair of rolling rollers (1100) upon the lamination process.

If the difference between the predetermined standard thickness of the battery cell (E) and the calculated thickness of the battery cell (E) is outside the acceptable error range, the control part (300) may determine the quality of the battery cell (E) to be defective. At this time, the control part (300) may also adjust the gap between the pair of rolling rollers (1100), and the control part (300) may also adjust the load applied to the pair of rolling rollers (1100).

In addition, the control part may be provided to control the operation of the transfer part (600) based on the quality state of the battery cell. In one example, the control part (300) may stop the operation of the conveyor (600) when the quality of the battery cell (E) is poor, and as such, it may prevent the battery cell (E) of poor quality and the battery cell (E) of good quality from being mixed.

The preferred examples of the present invention as described above have been disclosed for illustrative purposes, and those skilled in the art having ordinary knowledge of the present invention will be able to make various modifications, changes, and additions within the scope of the present invention, and such modifications, changes, and additions should be regarded as falling within the scope of the following claims.

### Industrial Applicability

According to the battery cell thickness measuring device related to at least one example of the present invention, and the lamination device for a secondary battery comprising the same, it is possible to measure thicknesses of battery cells in real time during a process that a plurality of battery cells continuously moves.

## Claims

1. A battery cell thickness measuring device (100) comprising:
a first pressurizing roller (110A) installed at a first fixed position (P1) on a transfer part (600), contacting a battery cell (E) when the battery cell during transfer passes the first fixed position, and pressurizing the battery cell in the thickness direction of the battery cell;
a first pressure-sensing film (200A) wound around the first pressurizing roller (110A) and provided to measure the pressure received from the battery cell while the first pressurizing roller pressurizes the battery cell; and
a control part (300) calculating the thickness of the battery cell based on the pressure measured by the first pressure-sensing film.

2. The battery cell thickness measuring device according to claim 1, wherein
the first pressure-sensing film is provided so that the pressure received from the battery cell increases as the thickness of the battery cell increases.

3. The battery cell thickness measuring device according to claim 1, further comprising:
a first fixing block positioned at a predetermined distance away from the transfer part at the first fixed position; and
a first elastic connection member elastically connecting the first fixing block and the first pressurizing roller.

4. The battery cell thickness measuring device according to claim 1, wherein
the first pressurizing roller is provided to enable idle-rotation.

5. The battery cell thickness measuring device according to claim 1, wherein
the control part is provided to calculate the difference between the calculated thickness of the battery cell and the predetermined standard thickness of the battery cell.

6. The battery cell thickness measuring device according to claim 5, wherein
if the difference between the predetermined standard thickness of the battery cell and the calculated thickness of the battery cell is outside an acceptable error range, the control part determines a quality of the battery cell to be defective.

7. The battery cell thickness measuring device according to claim 6, further comprising:
a display part displaying the quality state of the battery cell.

8. The battery cell thickness measuring device according to claim 6, wherein
the control part is provided to control the operation of the transfer part based on the quality state of the battery cell.

9. The battery cell thickness measuring device according to claim 1, further comprising:
a second pressurizing roller installed at a second fixed position spaced apart from the first fixed position along the transfer direction of the battery cell, contacting the battery cell when the battery cell during transfer passes the second fixed position, and pressurizing the battery cell in the thickness direction of the battery cell; and
a second pressure-sensing film wound around the second pressurizing roller and measuring the pressure received from the battery cell while the second pressurizing roller pressurizes the battery cell.

10. The battery cell thickness measuring device according to claim 9, wherein
the control part is provided to calculate the thickness of the battery cell based on the pressures measured by the first and second pressure-sensing films.

11. The battery cell thickness measuring device according to claim 1, wherein
the transfer part comprises a conveyor.

12. A lamination device for a secondary battery comprising:
a laminate part including a rolling roller rolling battery cells on which electrodes and separators are laminated;
a transfer part provided to transfer battery cells on which laminating is completed; and
the battery cell thickness measuring device according to claim 1 installed on the transfer path of the transfer part.

13. The lamination device for a secondary battery according to claim 12, wherein
if the difference between the predetermined standard thickness of the battery cell and the calculated thickness of the battery cell is outside an acceptable error range, the control part determines a quality of the battery cell to be defective.

14. The lamination device for a secondary battery according to claim 13, wherein
the control part is provided to control the operation of the laminate part based on the quality state of the battery cell.

15. The lamination device for a secondary battery according to claim 13, wherein
the control part is provided to control the operation of the transfer part based on the quality state of the battery cell.

## Patentansprüche

1. Batteriezellendickenmessvorrichtung (100) aufweisend:
eine erste Druckrolle (110A), die an einer ersten starre Position (P1) an einem Transferteil (600) installiert ist, eine Batteriezelle kontaktiert, wenn die Batteriezelle (E) während des Transfers die erste starre Position passiert, und Druck auf die Batteriezelle in der Dickenrichtung der Batteriezelle ausübt;
einen ersten Druckerfassungsfilm (200A), der um die erste Druckrolle (110A) gewickelt ist und bereitgestellt ist, um den von der Batteriezelle empfangenen Druck zu messen, während die erste Druckrolle Druck auf die Batteriezelle ausübt; und
ein Steuerteil (300), das die Dicke der Batteriezelle basierend auf dem Druck berechnet, welcher von dem ersten Druckerfassungsfilm gemessen ist.

2. Batteriezellendickenmessvorrichtung nach Anspruch 1, wobei
der erste Druckerfassungsfilm so bereitgestellt ist, dass der von der Batteriezelle empfangene Druck zunimmt, wenn die Dicke der Batteriezelle zunimmt.

3. Batteriezellendickenmessvorrichtung nach Anspruch 1, ferner aufweisend:
einen ersten Befestigungsblock, der in einem vorbestimmten Abstand von dem Transferteil an der ersten starren Position positioniert ist; und
ein erstes elastisches Verbindungselement, das den ersten Befestigungsblock und die erste Druckrolle elastisch verbindet.

4. Batteriezellendickenmessvorrichtung nach Anspruch 1, wobei
die erste Druckrolle bereitgestellt ist, um eine Leerlaufdrehung zu ermöglichen.

5. Batteriezellendickenmessvorrichtung nach Anspruch 1, wobei
das Steuerteil bereitgestellt ist, um die Differenz zwischen der berechneten Dicke der Batteriezelle und der vorbestimmten Standarddicke der Batteriezelle zu berechnen.

6. Batteriezellendickenmessvorrichtung nach Anspruch 5, wobei
wenn die Differenz zwischen der vorbestimmten Standarddicke der Batteriezelle und der berechneten Dicke der Batteriezelle außerhalb eines akzeptablen Fehlerbereichs liegt, das Steuerteil eine Qualität der Batteriezelle als defekt bestimmt.

7. Batteriezellendickenmessvorrichtung nach Anspruch 6, ferner aufweisend:
ein Anzeigeteil, das den Qualitätszustand der Batteriezelle anzeigt.

8. Batteriezellendickenmessvorrichtung nach Anspruch 6, wobei
das Steuerteil bereitgestellt ist, um den Betrieb des Transferteils basierend auf dem Qualitätszustand der Batteriezelle zu steuern.

9. Batteriezellendickenmessvorrichtung nach Anspruch 1, ferner aufweisend:
eine zweite Druckrolle, die an einer zweiten starren Position installiert ist, die von der ersten starren Position entlang der Transferrichtung der Batteriezelle beabstandet ist, die Batteriezelle kontaktiert, wenn die Batteriezelle während des Transfers die zweite starre Position passiert, und Druck auf die Batteriezelle in der Dickenrichtung der Batteriezelle ausübt; und
einen zweiten Druckerfassungsfilm, der um die zweite Druckrolle gewickelt ist und den von der Batteriezelle empfangenen Druck misst, während die zweite Druckrolle Druck auf die Batteriezelle ausübt.

10. Batteriezellendickenmessvorrichtung nach Anspruch 9, wobei
das Steuerteil bereitgestellt ist, um die Dicke der Batteriezelle basierend auf den Drücken zu berechnen, die von dem ersten und zweiten Druckerfassungsfilm gemessen sind.

11. Batteriezellendickenmessvorrichtung nach Anspruch 1, wobei
das Transferteil einen Förderer aufweist.

12. Laminiervorrichtung für eine Sekundärbatterie, aufweisend:
ein Laminatteil mit einer rollenden Rolle zum Rollen von Batteriezellen, auf welche Elektroden und Separatoren laminiert sind;
ein Transferteil, das bereitgestellt ist, um Batteriezellen zu transferieren, auf welchen das Laminieren abgeschlossen ist; und
die Batteriezellendickenmessvorrichtung nach Anspruch 1, die auf dem Transferpfad des Transferteils installiert ist.

13. Laminiervorrichtung für eine Sekundärbatterie nach Anspruch 12, wobei
wenn die Differenz zwischen der vorbestimmten Standarddicke der Batteriezelle und der berechneten Dicke der Batteriezelle außerhalb eines akzeptablen Fehlerbereichs liegt, das Steuerteil eine Qualität der Batteriezelle als defekt bestimmt.

14. Laminiervorrichtung für eine Sekundärbatterie nach Anspruch 13, wobei
das Steuerteil bereitgestellt ist, um den Betrieb des Laminatteils basierend auf dem Qualitätszustand der Batteriezelle zu steuern.

15. Laminiervorrichtung für eine Sekundärbatterie nach Anspruch 13, wobei
das Steuerteil bereitgestellt ist, um den Betrieb des Transferteils basierend auf dem Qualitätszustand der Batteriezelle zu steuern.

## Revendications

1. Dispositif de mesure de l'épaisseur d'un élément de batterie (100) comprenant :
un premier galet de pressurisation (110A) installé dans une première position fixe (P1) sur un élément de transfert (600) contactant un élément de batterie (E) lorsqu'au cours d'un transfert l'élément de batterie passe par la première position fixe, et mettant sous pression l'élément de batterie dans le sens de l'épaisseur de l'élément de batterie ;
un premier film de détection de pression (200A) enroulé autour du galet de pressurisation (110A) et agencé pour mesurer la pression reçue de l'élément de batterie lorsque le premier galet de pressurisation met l'élément de batterie sous pression ; et
un module de commande (300) calculant l'épaisseur de l'élément de batterie en fonction de la pression mesurée par le premier film de détection de pression.

2. Dispositif de mesure de l'épaisseur d'un élément de batterie selon la revendication 1,
le premier film de détection de pression étant agencé de sorte que la pression reçue de l'élément de batterie augmente au fur et à mesure de l'augmentation de l'épaisseur de l'élément de batterie.

3. Dispositif de mesure de l'épaisseur d'un élément de batterie selon la revendication 1, comprenant en outre :
un premier bloc de fixation positionné à une distance prédéterminée de l'élément de transfert à la première position fixe ; et
un premier élément de connexion élastique connectant de façon élastique le premier bloc de fixation et le premier galet de pressurisation.

4. Dispositif de mesure de l'épaisseur d'un élément de batterie selon la revendication 1,
le premier galet de pressurisation étant agencé pour permettre une rotation libre.

5. Dispositif de mesure de l'épaisseur d'un élément de batterie selon la revendication 1,
le module de commande étant agencé pour calculer la différence entre l'épaisseur calculée de l'élément de batterie et l'épaisseur standard prédéterminée de l'élément de batterie.

6. Dispositif de mesure de l'épaisseur d'un élément de batterie selon la revendication 5,
dans lequel, si la différence entre l'épaisseur standard prédéterminée de l'élément de batterie et l'épaisseur calculée de l'élément de batterie se trouve hors d'une plage d'erreur admissible, le module de commande décide qu'une qualité de l'élément de batterie est défectueuse.

7. Dispositif de mesure de l'épaisseur d'un élément de batterie selon la revendication 6, comprenant en outre :
un dispositif d'affichage affichant l'état de la qualité de l'élément de batterie.

8. Dispositif de mesure de l'épaisseur d'un élément de batterie selon la revendication 6, comprenant en outre :
le module de commande étant agencé pour contrôler le fonctionnement de l'élément de transfert d'après l'état de la qualité de l'élément de batterie.

9. Dispositif de mesure de l'épaisseur d'un élément de batterie selon la revendication 1, comprenant en outre :
un deuxième galet de pressurisation installé dans une deuxième position fixe espacée de la première position fixe dans le sens du transfert de l'élément de batterie, contactant l'élément de batterie lorsqu'au cours d'un transfert l'élément de batterie passe par la deuxième position fixe, et mettant sous pression l'élément de batterie dans le sens de l'épaisseur de l'élément de batterie ; et
un deuxième film de détection de pression enroulé autour du deuxième galet de pressurisation, et mesurant la pression reçue de l'élément de batterie lorsque le deuxième galet de pressurisation met l'élément de batterie sous pression.

10. Dispositif de mesure de l'épaisseur d'un élément de batterie selon la revendication 9,
le module de commande étant agencé pour calculer l'épaisseur de l'élément de batterie d'après les pressions mesurées par les premier et deuxième films de détection de pression.

11. Dispositif de mesure de l'épaisseur d'un élément de batterie selon la revendication 1,
l'élément de transfert comprenant un convoyeur.

12. Dispositif de laminage pour une batterie secondaire, comprenant :
un élément laminé comprenant un rouleau de laminage laminant des éléments de batterie sur lesquels des électrodes et des séparateurs sont laminés ;
un élément de transfert agencé pour transférer des éléments de batterie sur lesquels un laminage est effectué ; et
le dispositif de mesure de l'épaisseur de l'élément de batterie selon la revendication 1, installé sur le chemin de transfert de l'élément de transfert.

13. Dispositif de laminage pour une batterie secondaire selon la revendication 12,
dans lequel, si la différence entre l'épaisseur standard prédéterminée de l'élément de batterie et l'épaisseur calculée de l'élément de batterie est hors d'une plage d'erreur admissible, le module de commande décide qu'une qualité de l'élément de batterie est défectueuse.

14. Dispositif de laminage pour une batterie secondaire selon la revendication 13,
le module de commande étant agencé pour contrôler le fonctionnement de l'élément laminé d'après l'état de la qualité de l'élément de batterie.

15. Dispositif de laminage pour une batterie secondaire selon la revendication 13,
le module de commande étant agencé pour contrôler le fonctionnement de l'élément de transfert d'après l'état de la qualité de l'élément de batterie.
